# EUROPÄISCHE PATENTSCHRIFT

(11) **EP 2 606 611 B1**
(45) Veröffentlichungstag und Bekanntmachung des Hinweises auf die Patenterteilung: **03.09.2014**
(21) Anmeldenummer: 11749079.7
(22) Anmeldetag: 21.07.2011
(51) Int. Cl.: H04L 12/40

(54) **INSTALLATIONSGERÄT MIT UNIVERSELLER DATENKOPPLUNG IN DER GEBÄUDESYSTEMTECHNIK UND ANORDNUNGEN MIT DERART AUSGEBILDETEN INSTALLATIONSGERÄTEN**
INSTALLATION DEVICE WITH UNIVERSAL DATA COUPLING IN BUILDINGS SYSTEM ENGINEERING, AND ARRANGEMENTS WITH INSTALLATION DEVICES OF SUCH DESIGN
APPAREIL D'INSTALLATION AVEC COUPLAGE DE DONNÉES UNIVERSEL DANS LA TECHNIQUE D'ÉQUIPEMENT DES BÂTIMENTS ET DISPOSITIFS AVEC DE TELS APPAREILS D'INSTALLATION

(30) Priorität: 20.08.2010 DE 102010034991
(43) Veröffentlichungstag der Anmeldung: 26.06.2013
(73) Patentinhaber: ABB AG, 68309 Mannheim (DE)
(72) Erfinder: LEHNERT, Christian, 58239 Schwerte (DE); STRUWE, Christian, 96317 Kronach (DE)
(86) Internationale Anmeldenummer: PCT/EP2011/003653
(87) Internationale Veröffentlichungsnummer: WO 2012/022415

(56) Entgegenhaltungen:
- WO-A1-2009/086882
- DE-A1-102006 019 451
- DE-A1-102007 026 457

## Beschreibung

Die Erfindung betrifft ein Installationsgerät mit universeller Datenkoppelung in der Gebäudesystemtechnik sowie Anordnungen mit derart ausgebildeten Installationsgeräten.

Aus der DE 10 2007 026 457 A1 ist eine Vorrichtung zur Inbetriebnahme eines Feldbussystems mit mindestens einem Busteilnehmer bekannt, dem eine Schnittstelleneinrichtung zur Verbindung des Busteilnehmers mit einer Busleitung eines Bussystems vorgelagert ist. Die Schnittstelleneinrichtung verfügt über eine Bedieneinheit zur Eingabe von busspezifschen Parametern und weist eine Bediensteuereinheit derart auf, dass mindestens ein Bedienelement der Bedieneinheit zum Einen in einer Bus-Betriebsart zur Eingabe eines busspezifischen Parameters und zum Anderen in einer Sonder-Betriebsart zur Eingabe eines busteilnehmerspezifischen Parameters betätigbar ist.

Stand der Technik ist die Kommunikation von Installatiönsgeräten in der Gebäudesystemtechnik untereinander auf Basis von unterschiedlichen, fest verbauten Schnittstellen in den Installationsgeräten. Dabei kommen Kabelsysteme auf Basis von Kupfer oder Lichtleitern mit Buchsen und/oder Steckern oder optischen Komponenten zum Einsatz, die speziell auf die jeweiligen Bedürfnisse abgestimmt sind.

Dieser Stand der Technik hat die im Folgenden beschriebenen Nachteile:
- Die Verbindung ist an den jeweiligen Verwendungszweck fest gebunden.
- Die "geographische" Anordnung der Installationsgeräte und Geräteverbindung bei einer aus mehreren Installationsgeräten bestehenden Anordnung ist einmalig festzulegen und lässt sich nur mit hohem Aufwand verändern.
- Bei einer aus mehreren Installationsgeräten bestehenden Anordnung ist die Verbindung der Installationsgeräte untereinander fest vorgegeben.

Der Erfindung liegt die Aufgabe zugrunde, ein Installationsgerät mit universeller Datenkoppelung in der Gebäudesystemtechnik anzugeben.

Des Weiteren sollen Anordnungen mit derart ausgebildeten Installationsgeräten angegeben werden.

Diese Aufgabe wird bezüglich des Installationsgerätes erfindungsgemäß gelöst durch ein Installationsgerät mit universeller Datenkoppelung in der Gebäudesystemtechnik mit mindestens einer mechanischen Busanbindung und mindestens einem Schnittstellenmodul,
- wobei sowohl die mechanische Busanbindung als auch das Schnittstellenmodul zueinander korrespondierend ausgebildete, generische, mechanische Schnittstellen aufweisen,
- wobei an die generische, mechanische Schnittstelle der mechanischen Busanbindung eine Steuerlogik inklusive Busanbindung und ein Speicher angeschlossen sind,
- wobei an die generische, mechanische Schnittstelle des Schnittstellenmoduls eine Kommunikationsschnittstelle angeschlossen ist, welche eine Benutzer/Datenschnittstelle bildet,
- wobei unterschiedlich ausgestaltete Schnittstellenmodule mit unterschiedlich ausgebildeten Kommunikationsschnittstellen mit der mechanischen Busanbindung verbindbar sind.

Dabei kann die Kommunikationsschnittstelle des Schnittstellenmoduls wahlweise in Form eines IR-Anschlusses mit IR-Sensorik oder in Form eines Kabels oder in Form eines D-Sub-Anschlusses oder in Form eines USB-Anschlusses oder in Form einer RJ-Verbindung oder in Form einer POF-Buchse ausgebildet sein.

Mit Hilfe derart ausgebildeter Installationsgeräte können folgende Anordnungen geschaffen werden:
- Eine Anordnung mit zwei in vorstehender Art und Weise ausgebildeten Installationsgeräten, wobei deren Kommunikationsschnittstellen respektive Benutzer-/Datenschnittstellen über eine kabellose Installationsgeräteverbindung miteinander verbunden sind.
- Eine Anordnung mit zwei in vorstehender Art und Weise ausgebildeten Installationsgeräten, wobei deren Kommunikationsschnittstellen respektive Benutzer-/Datenschnittstellen über eine kabelgebundene Installationsgeräteverbindung miteinander verbunden sind.
- Eine Anordnung mit mindestens drei in vorstehender Art und Weise ausgebildeten Installationsgeräten, wobei die Installationsgeräte mindestens zwei mechanische Busanbindungen für den Anschluss von mindestens zwei Schnittstellenmodulen aufweisen und wobei die Kommunikationsschnittstellen respektive Benutzer-/Datenschnittstellen über kabellose Installationsgeräteverbindungen in "durchgeschleifter Verbindung" miteinander verbunden sind.
- Eine Anordnung mit mindestens drei in vorstehender Art und Weise ausgebildeten Installationsgeräten, wobei die Installationsgeräte mindestens zwei mechanische Busanbindungen für den Anschluss von mindestens zwei Schnittstellenmodulen aufweisen und wobei die Kommunikationsschnittstellen respektive Benutzer-/Datenschnittstellen über kabelgebundene Installationsgeräteverbindungen in "durchgeschleifter Verbindung" miteinander verbunden sind.

Die Erfindung ermöglicht vorteilhaft die einfache Kommunikation von Installationsgeräten der Gebäudesystemtechnik untereinander auf Basis eines universellen Datenankopplungssystems in einem Installationsgerät eines Elektro-Installationssystems in Reiheneinbau-, Unterputz- oder Aufputz-Ausführung. Insgesamt ergibt sich eine Kostenminimierung. verbesserte und flexible Handhabung durch den modularen Aufbau, gebildet durch mechanische Busanbindung und Schnittstellenmodule mit interner, generischer Schnittstelle und genormter Netzwerk/Busanbindung. Der wirtschaftliche Nutzen besteht in der einfachen Handhabung, der flexiblen Nutzung und Darstellung und damit einem erweiterten Anwendungsgebiet in der Gebäudesystemtechnik durch den Installateur und für den Endkunden. Zusammenfassend dient das vorgeschlagene universelle Datenkoppelungssystem für Installationsgeräte einer einfachen und flexiblen, d.h. leicht veränderlichen Einbausituation in der Gebäudesystemtechnik.

Von Wichtigkeit ist es, dass es sich um ein generisches Schnittstellenmodul handelt, welches in den Installationsgeräten zum Einsatz kommt, wodurch verhindert wird, dass es auf eine feste Funktion ausgeprägt ist. Neben einer kabellosen Verbindung kann ebenso gut eine kabelgebundene Verbindung zwischen zwei Installationsgeräten zum Einsatz kommen. Es existiert auch keine Einschränkung auf eine IR-Schnittstelle. Es wird eine freie Wahl der Schnittstelle auch nach bereits erfolgtem Einbau ermöglicht, d. h. es ist jederzeit ein Austausch der Schnittstellenmodule möglich.

Dabei sind die folgenden Definitionen wichtig:
- Unter dem Begriff "Elektro-Installationssystem" wird das Gebiet der Installationstechnik für den Wohn- und Zweckbau verstanden.
- Unter dem Begriff "Gebäudesystemtechnik" wird das Gebiet der Gebäudeautomatisation eines Elektro-Installationssystems verstanden.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: ein Installationsgerät mit einem (einzigen) Kommunikationsanschluss,
- Fig. 2: ein Installationsgerät mit zwei Kommunikationsanschlüssen,
- Fig. 3, 4: zwei Ausführungsformen eines Schnittstellenmoduls,
- Fig. 5: eine Installationsgeräteverbindung zwischen zwei Installationsgeräten mit je einem Kommunikationsanschluss in Form einer Schnittstelle ohne Verkabelung,
- Fig. 6: eine Installationsgeräteverbindung zwischen zwei Installationsgeräten mit je einem Kommunikationsanschluss in Form einer Schnittstelle mit Verkabelung,
- Fig. 7: eine Installationsgeräteverbindung zwischen zwei Installationsgeräten mit je zwei Kommunikationsanschlüssen in Form einer Schnittstelle ohne Verkabelung (kabellose Durchverbindung),
- Fig. 8: eine Installationsgeräteverbindung zwischen zwei Installationsgeräten mit je zwei Kommunikationsanschlüssen in Form einer Schnittstelle mit Verkabelung (kabelgebundene Durchverbindung),
- Fig. 9: eine Installationsgeräteverbindung zwischen mehr als zwei Installationsgeräten mit je zwei Kommunikationsanschlüssen in Form von Schnittstellen ohne Verkabelung (kabellose Durchverbindung),
- Fig. 10: eine Installationsgeräteverbindung zwischen mehr als zwei Installationsgeräten mit je zwei Kommunikationsanschlüssen in Form von Schnittstellen mit Verkabelung (kabelgebundene Durchverbindung),
- Fig. 11, 12: unterschiedliche Ausgestaltungsmöglichkeiten eines Basis-Installationsgerätes.

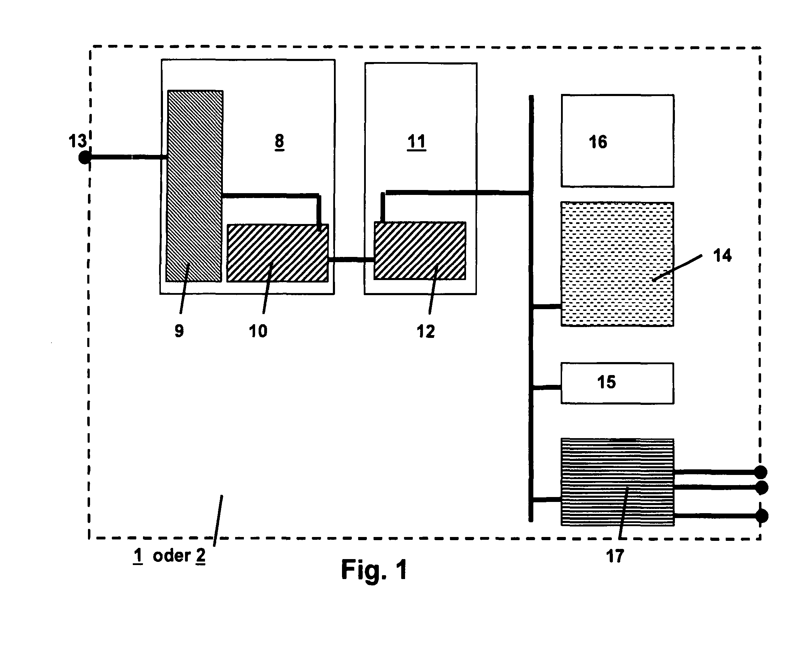

In Fig. 1 ist ein Installationsgerät mit einem (einzigen) Kommunikationsanschluss dargestellt. Dieses Installationsgerät 1 oder 2 (mit einem einzigen Kommunikationsanschluss) weist ein (erstes) Schnittstellenmodul 8 auf, welches aus einer (ersten) Kommunikationsschnittstelle 9 und einer damit verbundenen generischen mechanischen Schnittstelle 10 besteht. Letztere ist mit einer generischen mechanischen Schnittstelle 12 einer (ersten) mechanischen Busanbindung 11 verbunden. An die mechanische Busanbindung 11 sind eine Steuerlogik 14 inklusive Busanbindung, ein Speicher 15 und optional mindestens eine Geräteschnittstelle 17 angeschlossen. Für die Energieversorgung weist das Installationsgerät 1 oder 2 ein Netzteil 16 auf. Durch die Kommunikationsschnittstelle 9 wird eine (erste) Benutzer-/Datenschnittstelle 13 geschaffen.

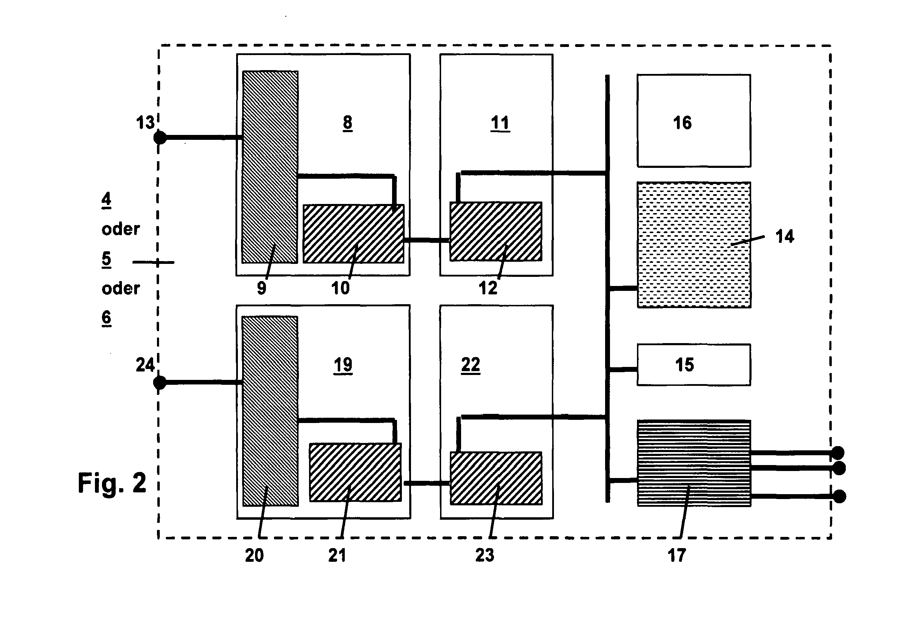

In Fig. 2 ist ein Installationsgerät mit zwei Kommunikationsanschlüssen dargestellt. Dieses Installationsgerät 4 oder 5 oder 6 weist die vorstehend erläuterte Konfiguration "erstes Schnittstellenmodul 8 mit erster Kommunikationsschnittstelle 9 und generischer mechanischer Schnittstelle 10, erste mechanische Busanbindung 11 mit generischer mechanischer Schnittstelle 12, Steuerlogik 14 inklusive Busanbindung, Speicher 15, Netzteil 16, mindestens eine Geräteschnittstelle 17" ebenfalls auf. Zusätzlich weist das Installationsgerät 4 oder 5 oder 6 ein zweites (optionales) Schnittstellenmodul 19 mit zweiter Kommunikationsschnittstelle 20 und generischer mechanischer Schnittstelle 21 sowie eine hieran angeschlossene zweite (optionale) mechanische Busanbindung 22 mit generischer mechanischer Schnittstelle 23 auf, welche ebenfalls an Steuerlogik 14 inklusive Busanbindung, Speicher 15 und die mindestens eine Geräteschnittstelle 17 angeschlossen ist und vom Netzteil 16 versorgt wird. Durch die Kommunikationsschnittstellen 9 respektive 20 wird eine erste Benutzer-/Datenschnittstelle 13 respektive eine zweite (optionale) Benutzer-/Datenschnittstelle 24 geschaffen.

Außer dem in Fig. 1 behandelten Installationsgerät mit einem Kommunikationsanschluss und dem in Fig. 2 behandelten Installationsgerät mit zwei Kommunikationsanschlüssen sind selbstverständlich auch Installationsgeräte mit drei oder vier usw. Kommunikationsanschlüssen realisierbar.

Das vorgeschlagene Installationsgerät mit universellem Busanschluss, vorstehend vorgestellt unter den Ziffern 1 oder 2 einerseits sowie unter den Ziffern 4 oder 5 oder 6 andererseits, besteht zusammenfassend aus den folgenden Komponenten:
- dem Netzteil 16 für die interne Spannungsversorgung, realisiert entweder über einen externen Spannungsanschluss, z.B. 230V Netz oder Kleinspannungsnetz, oder über das Netzwerk/Bussystem, z.B. PoE - Power over Ethernet, KNX - Konnex Twisted Pair Bus,

- der Steuerlogik 14 inklusive Busanbindung für die interne Funktionsverarbeitung,
- dem Speicher 15 für die temporäre Speicherung von Informationen und Zuständen,
- der mechanische Busanbindung 11 respektive 22, welche die Anschlussverbindung zwischen der Geräteelektronik an sich, z.B. durch Schraub-, Löt- oder Quetschverbindungen beispielsweise in LSA Technik, etc. auf der einen Seite bildet und die interne, generische, mechanische Schnittstelle 12 respektive 23 für die Aufnahme der verschiedenen Schnittstellenmodule 8 respektive 19 auf der anderen Seite stellt,
- das Schnittstellenmodul 8 respektive 19, welches die Anschlussverbindung zwischen der Benutzer-/Datenschnittstelle 13 respektive 24, z.B. EIA-232 bzw. RS-232 D-Sub, USB, TAE, ISDN, RJ-Verbindungen, POF, etc. auf der einen Seite bildet und die interne, generische, mechanische Schnittstelle 10 respektive 21 zur Kontaktierung mit der mechanischen Busanbindung 11 respektive 22 auf der anderen Seite stellt,
- die Kommunikationsschnittstelle 9 respektive 20 stellt die physikalische Verbindung der Benutzer-/Datenschnittstelle 13 respektive 24 z.B. in Form eines D-Sub, USB, RJ-Verbindungen für Datenübertragung, ISDN und Ethernet, Kabels, POF, etc.,
- die generischen, mechanischen Schnittstellen 10, 12 respektive 21, 23 stellen die interne, generische, mechanische Schnittstelle zur Anbindung verschiedener Schnittstellenmodule 8 respektive 19 zur Verfügung. Aufgrund der generischen Ausgestaltung können die Schnittstellenmodule 8 respektive 19 beliebig ausgetauscht werden.

Darüber hinaus weist das Installationsgerät Geräteschnittstellen 17 als optionale Komponenten für weitere Schnittstellen auf, die der Gerätefunktion dienen, z.B. Anschluss eines Verbrauchers zum Schalten oder Dimmen, Anschluss an einen Systembus, ...usw.

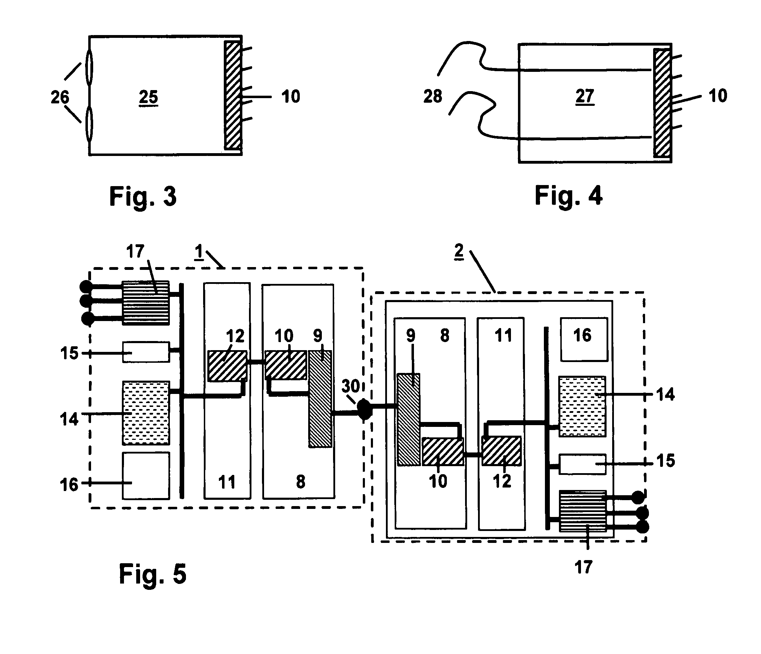

In den Fig. 3, 4 sind zwei Ausführungsformen eines Schnittstellenmoduls dargestellt, und zwar
- gemäß Fig. 3 ein Schnittstellenmodul 25 mit Benutzer-/Datenschnittstelle respektive Kommunikationsschnittstelle in Form eines IR(Infrarot)-Anschlusses mit IR-Sensorik (IR-Sende- und Empfangsdiode) einerseits und generischer mechanischer Schnittstelle 10 mit ihren Anschlusskontakten andererseits,
- gemäß Fig. 4 ein Schnittstellenmodul 27 mit Benutzer-/Datenschnittstelle respektive Kommunikationsschnittstelle in Form eines Kabels, insbesondere Kupferkabels - siehe Kabel 28 für Sende- und Empfangskanal - einerseits und generischer mechanischer Schnittstelle 10 mit ihren Anschlusskontakten andererseits.

Des Weiteren kann das Schnittstellenmodul wie folgt als Benutzer-/Datenschnittstelle respektive Kommunikationsschnittstelle ausgebildet sein:
- in Form eines D-Sub-Anschlusses
- in Form eines USB-Anschlusses
- in Form einer RJ-Verbindung für Datenübertragung, ISDN und Ethernet (RJ45 Buchse)
- in Form einer POF-Buchse.

In Fig. 5 ist eine Installationsgeräteverbindung zwischen zwei Installationsgeräten mit je einem Kommunikationsanschluss in Form einer Schnittstelle ohne Verkabelung dargestellt, d. h. eine Systemkonfiguration "kabellose Verbindung". Die beiden Installationsgeräte 1 und 2 sind dabei über ihre Benutzer-/Datenschnittstellen 13 respektive Kommunikationsschnittstellen 12 unmittelbar, d. h. ohne jede zusätzliche Kabelverbindung, miteinander verbunden, wodurch sich eine kabellose Installationsgeräteverbindung 30 ergibt.

Beispiele für eine derartige Installationsgeräteverbindung sind
- UP-Einbaugeräte mit kabelloser Verbindung direkt in der UP-Dose (beide Installationsgeräte werden nebeneinander in der UP-Dose verbaut und über ihre Benutzer-/Datenschnittstellen respektive Kommunikationsschnittstellen miteinander verbunden) oder
- DIN Reihen-Einbaugeräte mit kabelloser Verbindung direkt in der UP(Unterputz)-Verteilung / im Schaltschrank auf der Hut-Schiene (beide Installationsgeräte werden nebeneinander in der UP-Dose / auf der Hut-Schiene verbaut und über ihre Benutzer-/Datenschnittstellen respektive Kommunikationsschnittstellen miteinander verbunden).

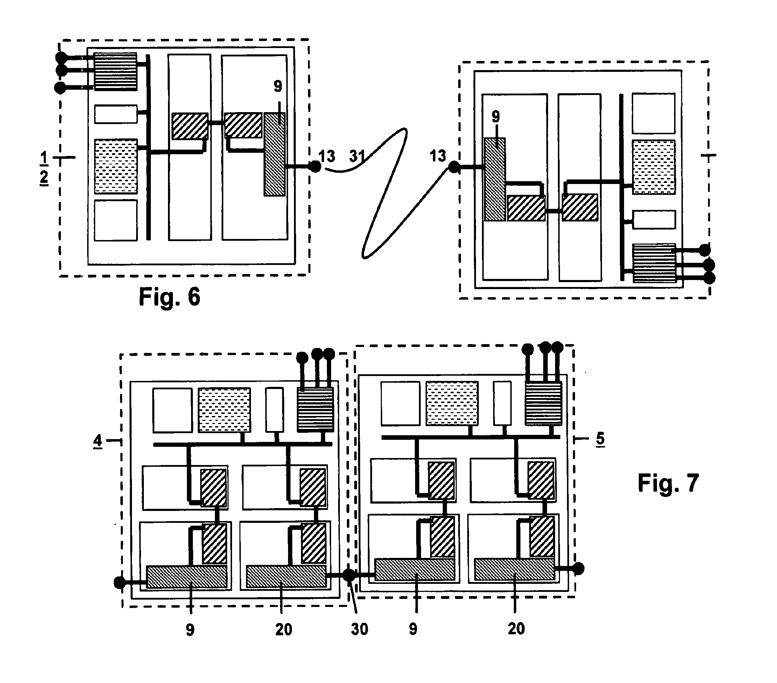

In Fig. 6 ist eine Installationsgeräteverbindung zwischen zwei Installationsgeräten mit je einem Kommunikationsanschluss in Form einer Schnittstelle mit Verkabelung dargestellt, d. h. eine Systemkonfiguration "Kabel-Verbindung". Die Benutzer-/Datenschnittstellen 13 respektive Kommunikationsschnittstellen der beiden Installationsgeräte 1 und 2 sind dabei über eine kabelgebundene Installationsgeräteverbindung 31, insbesondere über Kupferkabel oder Lichtwellenleiter miteinander verbunden.

In Fig. 7 ist eine Installationsgeräteverbindung zwischen zwei Installationsgeräten mit je zwei Kommunikationsanschlüssen in Form einer Schnittstelle ohne Verkabelung (kabellose Durchverbindung) dargestellt. Im gezeigten Ausführungsbeispiel sind die beiden Installationsgeräte 4 und 5 dabei über ihre Benutzer-/Datenschnittstellen 24 und 13 respektive Kommunikationsschnittstellen unmittelbar, d. h. ohne jede zusätzliche Kabelverbindung, miteinander verbunden, wodurch sich eine kabellose Installationsgeräteverbindung 30 ergibt.

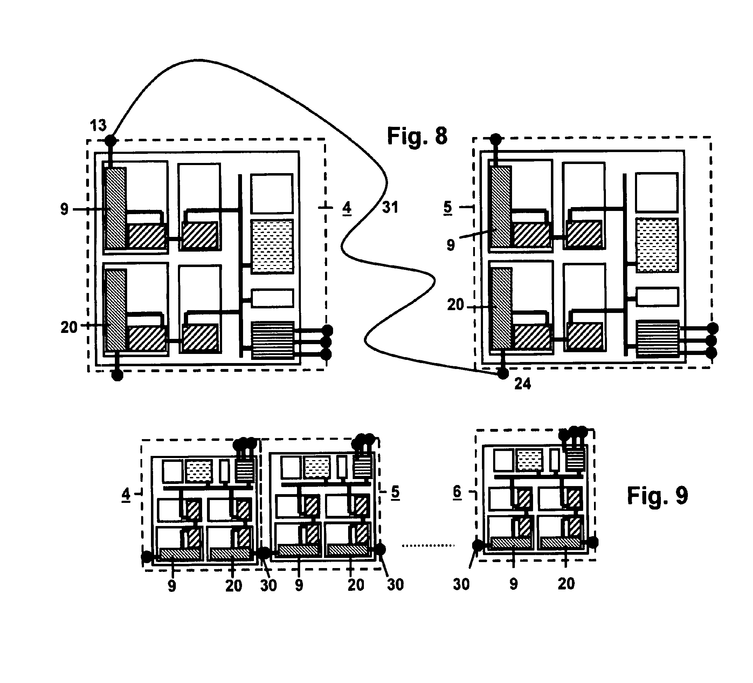

In Fig. 8 ist eine Installationsgeräteverbindung zwischen zwei Installationsgeräten mit je zwei Kommunikationsanschlüssen in Form einer Schnittstelle mit Verkabelung (kabelgebundene Durchverbindung) dargestellt. Im gezeigten Ausführungsbeispiel sind die Benutzer-/Datenschnittstellen 13 und 24 respektive Kommunikationsschnittstellen der beiden Installationsgeräte 4 und 5 dabei über eine kabelgebundene Installationsgeräteverbindung 31, insbesondere über Kupferkabel oder Lichtwellenleiter miteinander verbunden.

In Fig. 9 ist eine Installationsgeräteverbindung zwischen mehr als zwei Installationsgeräten mit je zwei Kommunikationsanschlüssen in Form von Schnittstellen ohne Verkabelung (kabellose Durchverbindung) dargestellt. Analog zum Ausführungsbeispiel gemäß Fig. 7 sind dabei zunächst die beiden Installationsgeräte 4 und 5 miteinander verbunden und es schließen sich beliebig viele weitere Installationsgeräte an, welche in gleicher Art und Weise an das jeweils benachbarte Installationsgerät angeschlossen werden, so dass sich jeweils eine kabellose Installationsgeräteverbindung 30 zwischen zwei Installationsgeräten ergibt. Lediglich beispielhaft ist ein drittes Installationsgerät 6 skizziert, welche ein beliebiges weiteres Installationsgerät "n" (n = 3, 4, 5 usw.) darstellt.

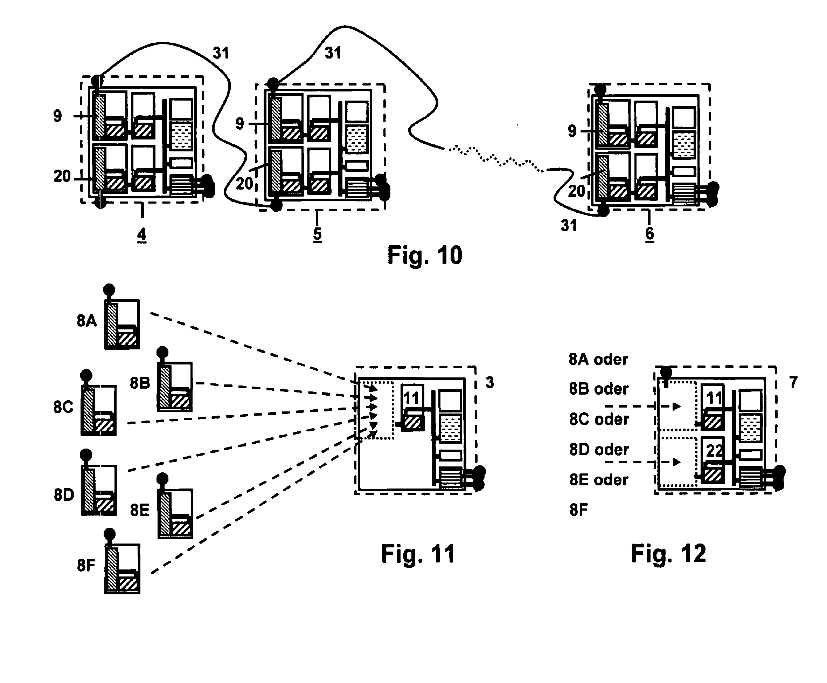

In Fig. 10 ist eine Installationsgeräteverbindung zwischen mehr als zwei Installationsgeräten mit je zwei Kommunikationsanschlüssen in Form von Schnittstellen mit Verkabelung (kabelgebundene Durchverbindung) dargestellt. Analog zum Ausführungsbeispiel gemäß Fig. 8 sind dabei zunächst die beiden Installationsgeräte 4 und 5 miteinander verbunden und es schließen sich beliebig viele weitere Installationsgeräte an, welche in gleicher Art und Weise an das jeweils benachbarte Installationsgerät angeschlossen werden, so dass sich jeweils eine kabelgebundene Installationsgeräteverbindung 31 zwischen zwei Installationsgeräten ergibt. Lediglich beispielhaft ist ein drittes Installationsgerät 6 skizziert, welche ein beliebiges weiteres Installationsgerät "n" (n = 3, 4, 5 usw.) darstellt.

Zusammenfassend betrachtet sind in den Figuren 7 - 10 Systemkonfigurationen respektive Anordnungen mit mehreren Installationsgeräten in "durchgeschleifter Verbindung" dargestellt.

In den Figuren 11 und 12 sind unterschiedliche Ausgestaltungsmöglichkeiten eines Basis-Installationsgerätes dargestellt. In Fig. 11 ist ein noch nicht mit einem Schnittstellenmodul bestücktes Basis-Installationsgerät 3 zu erkennen, welches durch den Installateur oder durch den Endkunden wahlweise mit einem der folgenden unterschiedlichen Schnittstellenmodule bestückt / komplettiert werden kann:
- mit einem Schnittstellenmodul 8A respektive 25 mit Benutzer-/Datenschnittstelle in Form eines IR-Anschlusses oder
- mit einem Schnittstellenmodul 8B respektive 27 mit Benutzer-/Datenschnittstelle in Form eines Kupferkabels oder
- mit einem Schnittstellenmodul 8C mit Benutzer-/Datenschnittstelle in Form eines D-Sub-Anschlusses oder
- mit einem Schnittstellenmodul 8D mit Benutzer-/Datenschnittstelle in Form eines USB-Anschlusses oder
- mit einem Schnittstellenmodul 8E mit Benutzer-/Datenschnittstelle in Form einer RJ-Verbindung oder
- mit einem Schnittstellenmodul 8F mit Benutzer-/Datenschnittstelle in Form einer POF-Buchse.

In Fig. 12 ist ein noch nicht mit einem Schnittstellenmodul bestücktes Basis-Installationsgerät 7 zu erkennen, welches durch den Installateur oder durch den Endkunden wahlweise mit zwei der vorstehend angeführten unterschiedlichen Schnittstellenmodule 8A - 8F bestückt / komplettiert werden kann, wobei die Schnittstellenmodule zwar vorzugsweise gleich, bedarfsweise jedoch auch unterschiedlich sein können, um ein an die gewünschte Anwendung genau angepasstes Installationsgerät zu schaffen.

### Bezugszeichenliste

- 1: Installationsgerät mit einem Kommunikationsanschluss
- 2: Installationsgerät mit einem Kommunikationsanschluss
- 3: Basis-Installationsgerät
- 4: Installationsgerät mit zwei Kommunikationsanschlüssen
- 5: Installationsgerät mit zwei Kommunikationsanschlüssen
- 6: Installationsgerät mit zwei Kommunikationsanschlüssen
- 7: Basis-Installationsgerät
- 8: (erstes) Schnittstellenmodul
- 9: (erste) Kommunikationsschnittstelle
- 10: generische mechanische Schnittstelle
- 11: (erste) mechanische Busanbindung
- 12: generische mechanische Schnittstelle
- 13: (erste) Benutzer-/Datenschnittstelle
- 14: Steuerlogik inklusive Busanbindung
- 15: Speicher
- 16: Netzteil
- 17: Geräteschnittstelle(n)
- 18: -
- 19: zweites (optionales) Schnittstellenmodul
- 20: zweite Kommunikationsschnittstelle
- 21: generische mechanische Schnittstelle
- 22: zweite (optionale) mechanische Busanbindung
- 23: generische mechanische Schnittstelle
- 24: zweite (optionale) Benutzer-/Datenschnittstelle
- 25: Schnittstellenmodul mit Benutzer-/Datenschnittstelle in Form eines IR-Anschlusses
- 26: IR-Sensorik
- 27: Schnittstellenmodul mit Benutzer-/Datenschnittstelle in Form eines Kupferkabels
- 28: Kabel
- 29: -
- 30: kabellose Installationsgeräteverbindung
- 31: kabelgebundene Installationsgeräteverbindung

## Patentansprüche

1. Installationsgerät (1, 2, 4, 5, 6) mit universeller Datenkoppelung in der Gebäudesystemtechnik mit mindestens einer mechanischen Busanbindung (11, 22) und mindestens einem Schnittstellenmodul (8, 19, 25, 27), wobei sowohl die mechanische Busanbindung (11, 22) als auch das Schnittstellenmodul (8, 19, 25, 27) zueinander korrespondierend ausgebildete, generische, mechanische Schnittstellen (10, 12, 21, 23) aufweisen, **dadurch gekennzeichnet,**
- **dass** an die generische, mechanische Schnittstelle (12, 23) der mechanischen Busanbindung (11, 22) eine Steuerlogik (14) inklusive Busanbindung und ein Speicher (15) angeschlossen sind,
- **dass** an die generische, mechanische Schnittstelle (10, 21) des Schnittstellenmoduls (8, 19, 25, 27) eine Kommunikationsschnittstelle (9, 20) angeschlossen ist, welche eine Benutzer-/Datenschnittstelle (13, 24) bildet,
- **dass** unterschiedlich ausgestaltete Schnittstellenmodule (8, 19, 25, 27) mit unterschiedlich ausgebildeten Kommunikationsschnittstellen (9, 20) mit der mechanischen Busanbindung (11, 22) verbindbar sind.

2. Installationsgerät nach Anspruch 1, **dadurch gekennzeichnet, dass** die Kommunikationsschnittstelle (9, 20) des Schnittstellenmoduls (8, 19, 25, 27) in Form eines IR (IR: Infra Red) Anschlusses mit IR-Sensorik ausgebildet ist.

3. Installationsgerät nach Anspruch 1, **dadurch gekennzeichnet, dass** die Kommunikationsschnittstelle (9, 20) des Schnittstellenmoduls (8, 19, 25, 27) in Form eines Kabels ausgebildet ist.

4. Installationsgerät nach Anspruch 1, **dadurch gekennzeichnet, dass** die Kommunikationsschnittstelle (9, 20) des Schnittstellenmoduls (8, 19, 25, 27) in Form eines D-Sub (D-Sub: D Subminiature : Steckersystem für Datenverbindungen mit D-ähnlicher Form des äußeren Steckverbinders) Anschlusses ausgebildet ist.

5. Installationsgerät nach Anspruch 1, **dadurch gekennzeichnet, dass** die Kommunikationsschnittstelle (9, 20) des Schnittstellenmoduls (8, 19, 25, 27) in Form eines USB (USB: Universal Serial Bus) Anschlusses ausgebildet ist.

6. Installationsgerät nach Anspruch 1, **dadurch gekennzeichnet, dass** die Kommunikationsschnittstelle (9, 20) des Schnittstellenmoduls (8, 19, 25, 27) in Form einer RJ (RJ. Registered Jack) Verbindung ausgebildet ist.

7. Installationsgerät nach Anspruch 1, **dadurch gekennzeichnet, dass** die Kommunikationsschnittstelle (9, 20) des Schnittstellenmoduls (8, 19, 25, 27) in Form einer POF (POF: Polymeric Optical Fiber) Buchse ausgebildet ist.

8. Installationsgerät nach einem der vorstehenden Ansprüche, **dadurch gekennzeichnet, dass** an die mechanische Busanbindung (11, 22) mindestens eine Geräteschnittstelle (17) angeschlossen ist.

9. Installationsgerät nach einem der vorstehenden Ansprüche, **dadurch gekennzeichnet, dass** ein Netzteil (16) zur Energieversorgung vorgesehen ist.

10. Anordnung mit zwei gemäß einem der vorstehenden Ansprüche 1 - 9 ausgebildeten Installationsgeräten (1, 2), wobei die Kommunikationsschnittstellen (9, 20) respektive Benutzer-/Datenschnittstellen (13, 24) über eine kabellose Installationsgeräteverbindung (30) miteinander verbunden sind.

11. Anordnung mit zwei gemäß einem der vorstehenden Ansprüche 1 - 9 ausgebildeten Installationsgeräten (1, 2), wobei die Kommunikationsschnittstellen (9, 20) respektive Benutzer-/Datenschnittstellen (13, 24) über eine kabelgebundene Installationsgeräteverbindung (31) miteinander verbunden sind.

12. Anordnung mit mindestens drei gemäß einem der vorstehenden Ansprüche 1 - 9 ausgebildeten Installationsgeräten (4, 5, 6), wobei die Installationsgeräte (4, 5, 6) mindestens zwei mechanische Busanbindungen (11, 22) für den Anschluss von mindestens zwei Schnittstellenmodulen (8,19, 25, 27) aufweisen und wobei die Kommunikationsschnittstellen (9, 20) respektive Benutzer-/Datenschnittstellen (13, 24) über kabellose Installationsgeräteverbindungen (30) in "durchgeschleifter Verbindung" miteinander verbunden sind.

13. Anordnung mit mindestens drei gemäß einem der vorstehenden Ansprüche 1 - 9 ausgebildeten Installationsgeräten (4, 5, 6), wobei die Installationsgeräte (4, 5, 6) mindestens zwei mechanische Busanbindungen (11, 22) für den Anschluss von mindestens zwei Schnittstellenmodulen (8,19, 25, 27) aufweisen und wobei die Kommunikationsschnittstellen (9, 20) respektive Benutzer-/Datenschnittstellen (13, 24) über kabelgebundene Installationsgeräteverbindungen (31) in "durchgeschleifter Verbindung" miteinander verbunden sind.

## Claims

1. Installation device (1, 2, 4, 5, 6) with universal data coupling in buildings system engineering with at least one mechanical bus connection (11, 22) and at least one interface module (8, 19, 25, 27), wherein both the mechanical bus connection (11, 22) and the interface module (8, 19, 25, 27) have generic, mechanical interfaces (10, 12, 21, 23) designed to correspond to one another, **characterized**
- **in that** the generic, mechanical interface (12, 23) of the mechanical bus connection (11, 22) has a control logic unit (14), including a bus connection and a memory (15), connected to it,
- **in that** the generic, mechanical interface (10, 21) of the interface module (8, 19, 25, 27) has a communication interface (9, 20) connected to it which forms a user/data interface (13, 24),
- **in that** interface modules (8, 19, 25, 27) of different design can be connected to communication interfaces (9, 20) of different design using the mechanical bus connection (11, 22).

2. Installation device according to Claim 1, **characterized in that** the communication interface (9, 20) of the interface module (8, 19, 25, 27) is designed in the form of an IR (IR: Infra Red) connection with IR Sensor system.

3. Installation device according to Claim 1, **characterized in that** the communication interface (9, 20) of the interface module (8, 19, 25, 27) is designed in the form of a cable.

4. Installation device according to Claim 1, **characterized in that** the communication interface (9, 20) of the interface module (8, 19, 25, 27) is designed in the form of a D-sub (D-sub: D-subminiature: connector system for data connections having the outer connector in the shape of a D) connection.

5. Installation device according to Claim 1, **characterized in that** the communication interface (9, 20) of the interface module (8, 19, 25, 27) is designed in the form of a USB (USB: Universal Serial Bus) connection.

6. Installation device according to Claim 1, **characterized in that** the communication interface (9, 20) of the interface module (8, 19, 25, 27) is designed in the form of an RJ (RJ: Registered Jack) connection.

7. Installation device according to Claim 1, **characterized in that** the communication interface (9, 20) of the interface module (8, 19, 25, 27) is designed in the form of a POF (Polymeric Optical Fiber) socket.

8. Installation device according to one of the preceding claims, **characterized in that** a mechanical bus connection (11, 22) has at least one device interface (17) connected to it.

9. Installation device according to one of the preceding claims, **characterized in that** a mains adapter (16) is provided as power supply.

10. Arrangement with two installation devices (1, 2) designed in accordance with one of the preceding Claims 1 - 9, wherein the communication interfaces (9, 20) or user/data interfaces (13, 24), respectively, are connected to one another via a cableless installation device connection (30).

11. Arrangement with two installation devices (1, 2) designed in accordance with one of the preceding Claims 1 - 9, wherein the communication interfaces (9, 20) or user/data interfaces (13, 24), respectively, are connected to one another via a cable-connected installation device connection (31).

12. Arrangement with at least three installation devices (4, 5, 6) designed in accordance with one of the preceding Claims 1 - 9, wherein the installation devices (4, 5, 6) have at least two mechanical bus connections (11, 22) for the connection of at least two interface modules (8, 19, 25, 27) and wherein the communication interfaces (9, 20) or user/data interfaces (13, 24), respectively, are connected to one another via cableless installation device connections (30) in "looped-through connection".

13. Arrangement with at least three installation devices (4, 5, 6) designed in accordance with one of the preceding Claims 1 - 9, wherein the installation devices (4, 5, 6) have at least two mechanical bus connections (11, 22) for the connection of at least two interface modules (8, 19, 25, 27) and wherein the communication interfaces (9, 20) or user/data interfaces (13, 24), respectively, are connected to one another via cable-connected installation device connections (31) in "looped-through connection".

## Revendications

1. Appareil d'installation (1, 2, 4, 5, 6) comportant un couplage de données universel conforme à la technique des systèmes pour bâtiments comprenant au moins une connexion de bus mécanique (11, 22) et au moins un module d'interface (8, 19, 25, 27), dans lequel la connexion de bus mécanique (11, 22) et le module d'interface (8, 19, 25, 27) comprennent des interfaces mécaniques génériques réalisées de manière à ce qu'elles se correspondent mutuellement (10, 12, 21, 23), **caractérisé**
- **en ce qu'**une liaison de bus et une mémoire (15) comportant une logique de commande (14) sont reliées à l'interface mécanique générique (12, 23) de la liaison de bus mécanique (11, 22),
- **en ce qu'**une interface de communication (9, 20), qui forme une interface d'utilisateur/données (13, 24), est reliée à l'interface mécanique générique (10, 21) du module d'interface (8, 19, 25, 27),
- **en ce que** des modules d'interface réalisés de manière différente (8, 19, 25, 27) peuvent être connectés à des interfaces de communication réalisées de manière différente (9, 20) par l'intermédiaire de la connexion de bus mécanique (11, 22).

2. Appareil d'installation selon la revendication 1, **caractérisé en ce que** l'interface de communication (9, 20) du module d'interface (8, 19, 25, 27) est réalisée sous la forme d'une connexion IR (IR : Infrarouge) comportant un système de capteur IR.

3. Appareil d'installation selon la revendication 1, **caractérisé en ce que** l'interface de communication (9, 20) du module d'interface (8, 19, 25, 27) est réalisée sous la forme d'un câble.

4. Appareil d'installation selon la revendication 1, **caractérisé en ce que** l'interface de communication (9, 20) du module d'interface (8, 19, 25, 27) est réalisée sous la forme d'une connexion D-Sub (D-Sub : Système de connecteur sub-miniature pour les liaisons de données dont le connecteur extérieur présente une forme en D).

5. Appareil d'installation selon la revendication 1, **caractérisé en ce que** l'interface de communication (9, 20) du module d'interface (8, 19, 25, 27) est réalisée sous la forme d'une connexion USB (USB : Universal Serial Bus).

6. Appareil d'installation selon la revendication 1, **caractérisé en ce que** l'interface de communication (9, 20) du module d'interface (8, 19, 25, 27) est réalisée sous la forme d'une liaison RJ (RJ : Registered Jack).

7. Appareil d'installation selon la revendication 1, **caractérisé en ce que** l'interface de communication (9, 20) du module d'interface (8, 19, 25, 27) est réalisée sous la forme d'un connecteur POF (POF : Polymeric Optical Fiber).

8. Appareil d'installation selon l'une quelconque des revendications précédentes, **caractérisé en ce qu'**une interface d'appareil (17) est connectée à la connexion de bus mécanique (11, 22).

9. Appareil d'installation selon l'une quelconque des revendications précédentes, **caractérisé en ce qu'**une alimentation électrique (16) est prévue pour l'alimentation en énergie.

10. Dispositif comportant deux appareils d'installation (1, 2) réalisés selon l'une quelconque des revendications 1-9 précédentes, dans lequel les interfaces de communication (9, 20) et les interfaces d'utilisateurs/données respectives (13, 24) sont connectées l'une à l'autre par l'intermédiaire d'une liaison d'appareil d'installation sans câble (30).

11. Dispositif comportant deux appareils d'installation (1, 2) réalisés selon l'une quelconque des revendications 1-9 précédentes, dans lequel les interfaces de communication (9, 20) et les interfaces d'utilisateurs/données (13, 24) respectives sont connectées l'une à l'autre par l'intermédiaire d'une liaison d'appareil d'installation connectée par câble (31) .

12. Dispositif comportant au moins trois appareils d'installation (4, 5, 6) réalisés selon l'une quelconque des revendications 1-9 précédentes, dans lequel les appareils d'installation (4, 5, 6) comprennent au moins deux connexions de bus mécaniques (11, 22) pour la connexion d'au moins deux modules d'interface (8, 19, 25, 27) et dans lequel les interfaces de communication (9, 20) et les interfaces d'utilisateurs/données (13, 24) respectives sont connectées l'une à l'autre par l'intermédiaire de liaisons d'appareil d'installation sans câble (30) par une "connexion en boucle".

13. Dispositif comportant au moins trois appareils d'installation (4, 5, 6) réalisés selon l'une quelconque des revendications 1-9 précédentes, dans lequel les appareils d'installation (4, 5, 6) comprennent au moins deux connexions de bus mécaniques (11, 22) pour la connexion d'au moins deux modules d'interface (8, 19, 25, 27) et dans lequel les interfaces de communication (9, 20) et les interfaces d'utilisateurs/données (13, 24) respectives sont connectées l'une à l'autre par l'intermédiaire de liaisons d'appareil d'installation connectées par câble (31) par une "connexion en boucle".
